# EUROPÄISCHE PATENTANMELDUNG

(11) **EP 1 367 257 A2**
(43) Veröffentlichungstag der Anmeldung: **03.12.2003**
(21) Anmeldenummer: 03009445.2
(22) Anmeldetag: 25.04.2003
(51) Int. Cl.: F03D 3/04

(54) **Abgeschirmte Windturbine**

(30) Priorität: 31.05.2002 DE 10224044
(71) Anmelder: SIEMENS AKTIENGESELLSCHAFT, 80333 München (DE)
(72) Erfinder: Nagy, Sandor, 99094 Hochheim (DE)

(57) **Zusammenfassung**

Die Erfindung betrifft eine Windkraftanlage mit Rotationsantrieb in Kombination mit mechanischen und selbsterregenden Kupplungssystemen. Der Rotationsantrieb als Windkraftanlage kann in allen Bereichen eingesetzt werden. Das elektromagnetische Kupplungssystem kann in allen industriellen Bereichen, allen Bereichen und Arten von Fahrzeugtechnologie und in allen Bereichen der Elektrotechnik Anwendung finden.

Durch die Kombination einer Windkraftanlage mit Rotationsantrieb mit mechanischen und selbsterregenden Kupplungssystemen wird erreicht, dass unabhängig von der Baugröße durch die Schaufelanordnung und den speziellen Aufbau des Gehäuses eine effektivere Ausnutzung der Windkraft als mit herkömmlichen Windrädern möglich ist. Das selbsterregende Kupplungssystem hat ferner den baulichen Vorteil, dass der Magnet in einem Raum mit dem Eisenkern zusammengefasst ist und auf der anderen Seite eine kurzgeschlossene Spule erregt wird. Der Strom für die elektromagnetische Kupplung kann auch direkt von der Generatorstufe abgenommen werden.

Das selbsterregende Kupplungssystem kann direkt an der Welle der Generatorstufe angeordnet oder durch ein Getriebe damit verbunden und transformierbar sein. Beim Rotationsantrieb sind auch alle Arten von mechanischen Kupplungen nutzbar.

## Beschreibung

Die Erfindung betrifft eine Windkraftanlage mit Rotationsantrieb in Kombination mit mechanischen und selbsterregenden Kupplungssystemen.

Bei heutigen genutzten Windrädern kann nur ein Teil der vom Wind auftreffenden Kraft genutzt werden, weil bei den Schaufeln des Windrades die Windkraft bei beiden Seiten gleichmäßig drückt. Nur durch die Krümmung der Schaufeln sind höhere Leistungen zu erwarten.

Bei der erfindungsgemäßen Windkraftanlage mit Rotationsantrieb ist das Windrad 1 in einem speziell ausgebildeten Gehäuse 2. Das Gehäuse 2 ist so ausgebildet, dass das halbe Windrad 1 in der freiliegenden Zone 6 rotiert. Hier trifft die Windkraft von vorn auf die Schaufeln und treibt diese an. Die andere Hälfte des Gehäuses 2 ist so ausgebildet, dass das Windrad 1 in einer Windsperrzone 14 steht und der auftreffende Wind durch die Ausformung des Gehäuses 2 in die Windeinlassöffnung 5 gepresst wird.
Durch die Windeinlassöffnungen 5 wird der Luftstrom des auftreffenden Windes in die Windumkehrkammern gepresst und so umgelenkt, dass er von hinten an die gekrümmten Schaufeln des Windrades herangeführt wird. Dadurch kann ein größerer Teil der Energie des auftreffenden Windes in die Drehbewegung umgewandelt werden.
Das Gehäuse 2 kann so ausgeformt sein, dass eine Windeinlassöffnung 5 den Luftstrom des auftreffenden Windes in die Windumkehrkammern 15 leitet, in welchen Gleichrichtungsbleche 3 in gewünschter Anzahl und Ausformung angeordnet sein können, um die Schaufeln des Windrades 1 in der gewünschten Richtung antreiben.

Es ist aber auch möglich, mehrere Windeinlassöffnungen anzuordnen, die mit Windumkehrkammern 15 und Gleichrichtungsblechen 3 des Luftstroms des Windes an die Schaufeln des Windrades 1 in der gewünschten Richtung heranführen.
In den Windumkehrkammern 15 können weiterhin auch noch Stoßstutzen 4 angeordnet sein, um den Luftstrom des Windes in die gewünschte Richtung zu wirbeln.
Die Anzahl sowie die Ausformung der Windeinlassöffnungen 5, Windumkehrkammern 15 und Gleichrichtungsbleche 3 ist variabel, aber an der Funktion ändert sich nichts.
In einer weiteren Variante des Aufbaus können noch Trennbleche 11 angeordnet werden, wodurch die Luft nicht aus dem Bereich von einer Kammer in die andere entweichen kann, sondern zwischen den Schaufeln des Windrades 1 transportiert wird. Durch bewegliche Windeinfangbleche 16 am Windradgehäuse 2 kann eine größere Luftstrommenge genutzt werden.

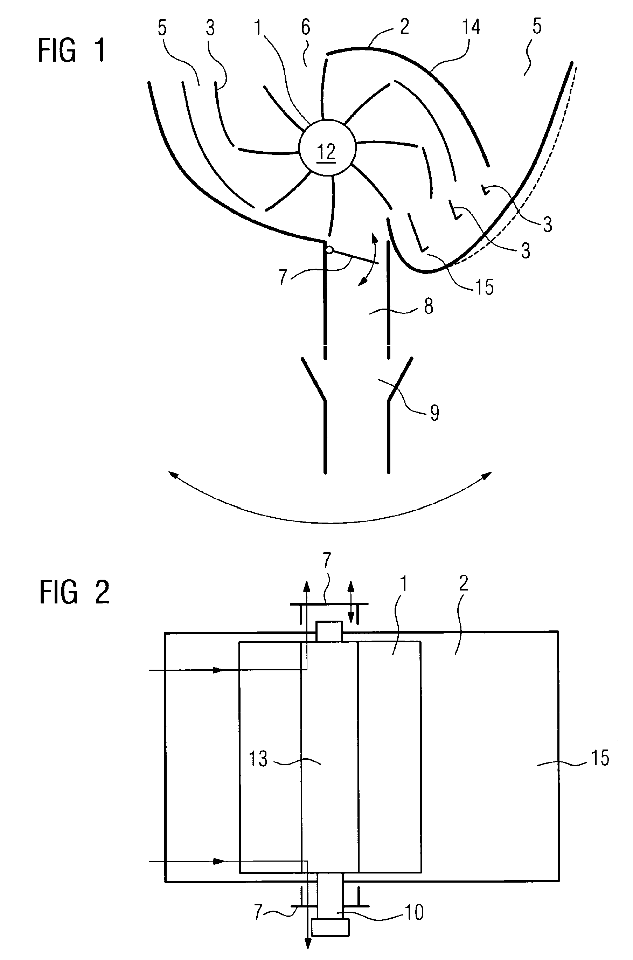

Das Gehäuse 2 mit den Öffnungen des Windrades 1, die freiliegende Zone 6 und die Windeinlassöffnungen 5 müssen immer nach der Windrichtung entweder mechanisch oder durch Fernsteuerung ausgerichtet werden. Um den inneren Druck und dadurch die Leistungen, sowie die Drehzahl des Windrades 1 zu steuern und bei unterschiedlichen Windstärken anzupassen, ist ein stellbares Ablassventil 7 zu Steuerung der entströmenden Luftmenge angeordnet.
Es ist variabel, ob ein oder mehrere Ablassventile 7 eingebaut sind, als auch ihre Bauart. Die Ablassventile 7 können mechanisch reguliert als auch computergesteuert werden.
Um das Abströmen des Luftstromes durch den Windablasskanal 8 zu beschleunigen können Unterdrucksysteme 9 angeordnet werden. Das Ablassventil 7 und der Windablasskanal 8 können an der Rückseite des Gehäuses angeordnet sein oder an einer anderen gewünschten Stelle so wie in Figur 2 verdeutlicht. In Figur 2 wird durch das Innere des Läufers des Windrades der Luftstrom abgeleitet, gesteuert durch die Ablassventile 7. Zur Stromerzeugung kann ein Generator 12 aber auch ein mehrstufiger Generator 17 in den Läufer des Windrades eingebaut werden oder außen angeordnet. Der mehrstufige Generator 17 kann mit allen Arten mechanischer oder auch selbsterregender Kupplungssystemen verbunden sein.

Bei dem Rotationsantrieb kann eine synchrone Arbeitsweise durch die Umkehrung der Strömungsrichtung des Luftstromes im Bereich der Windsperrzone 14 erreicht werden.
Durch Windeinfangbleche 16 kann das Volumen des zum Windrad geleiteten Luftstromes vergrößert werden. Der Rotationsantrieb mit und ohne Windeinfangbleche 16 muss immer nach der Windrichtung ausgerichtet werden, entweder mechanisch oder ferngesteuert aber auch durch alle Arten gebräuchlicher Steuerungssysteme.
Die durch den Rotationsantrieb erzeugte mechanische Kraft kann zu einem Generator geleitet werden, aber auch anderweitig genutzt werden. Zur Kraftübertragung sind alle Arten von mechanischer Kraftübertragung nutzbar.

Durch das Ablassventil 7 das stellbar ist, lässt sich die Laufgeschwindigkeit des Windrades 1 bei den verschiedenen Windgeschwindigkeiten regeln und anpassen. Es steuert die Leistung des Windrades.
Alle Arten von Wind- oder Schaufelrädern können beim Rotationsantrieb angewandt werden. Die Ausformung der Schaufeln ist variabel. Ebenso ist die Ausformung des Gehäuses 2 mit freiliegender Zone 6 und Windsperrzone 14 variabel. Es ist auch möglich, in ein Gehäuse 2 zwei Windräder 1 anzuordnen, unabhängig davon können ein Generator oder ein mehrstufiger Generator entweder im Inneren des Läufers des Windrades 1 angeordnet sein oder auch durch alle bekannten Arten der Kraftübertragung mit der Welle des Windrades 1 verbunden sein.
Es kann auch das erfindungsgemäße selbsterregende elektromagnetische Kupplungssystem angewandt werden.
Das selbsterregende elektromagnetische Kupplungssystem kann auch zur Verbindung zwischen die Stufen eines mehrstufigen Generators genutzt werden.

Die selbsterregende Kupplung ist überall dort einsetzbar, wo eine Drehzahluntersetzung nötig ist (z. B. Gasturbinen, schnelllaufende Motoren usw.).
Die Technologie des Rotationsantriebs kann überall dort Anwendung finden, wo die Windkraft ausgenutzt wird um entweder nur mechanische Kraft zu erzeugen oder diese noch in Strom umzuwandeln.
Er ist geeignet für große Windkraftanlagen aber auch für kleine Geräte die im Hausbereich, Camping, auf Booten und Schiffen zur Stromerzeugung genutzt werden können.

### Figur 1

Figur 1 zeigt einen Rotationsantrieb bei welchem das Windrad 1 so von dem Gehäuse 2 ummantelt ist, dass es zur Hälfte in der freiliegenden Zone 6 dreht und die andere Hälfte zu einer Windumkehrkammer 15 ausgebildet ist. Das Gehäuse 2 bildet eine Windsperrzone 14 um das halbe Windrad 1 und verhindert, dass der auftreffende Wind auf den Lauf des Windrades wirkt. Durch angeordnete Windeinlassöffnungen 5 in variabler Anzahl wird der Luftstrom des auftreffenden Windes in die Windumkehrkammer 15 gepresst und dort so umgelenkt, dass er von hinten an die Schaufeln des Windrades 1 herangeführt wird und die Drehbewegung des Windrades 1 unterstützt.
Die angeordneten Gleichrichtungsbleche 3 in den Windumkehrkammern 15 leiten den Luftstrom des einströmenden Windes.
Die das Windrad 1 treibende Luftmenge kann nur durch den Windablasskanal 8 entweichen. Durch das stellbare Ablassventil 7 an der Öffnung des Windablasskanals 8 kann die Menge des entweichenden Luftstromes reguliert werden. Es regelt den inneren Druck weil es die im Windrad verbleibende Luftmenge regelt.
Durch ein im Ablasskanal 8 angeordnetes Unterdrucksystem 9 kann das Abströmen der Luft durch den Windablasskanal 8 beschleunigt werden.

### Figur 2

Figur 2 zeigt den Aufriss einer Aufbauvariante des Rotationsantriebs. Das Windrad 1 hat im Inneren Winddurchlauföffnungen 13. Die abströmende Luft wird durch das Innere des Windradläufers 1 seitlich abgeleitet. Durch die stellbaren Ablassventile 7 wird die Menge der abströmenden Luft reguliert. Über die Antriebswelle 10 kann die erzeugte mechanische Kraft abgenommen werden. Es ist aber auch möglich, die Kraft an anderer Stelle abzunehmen.

### Figur 3

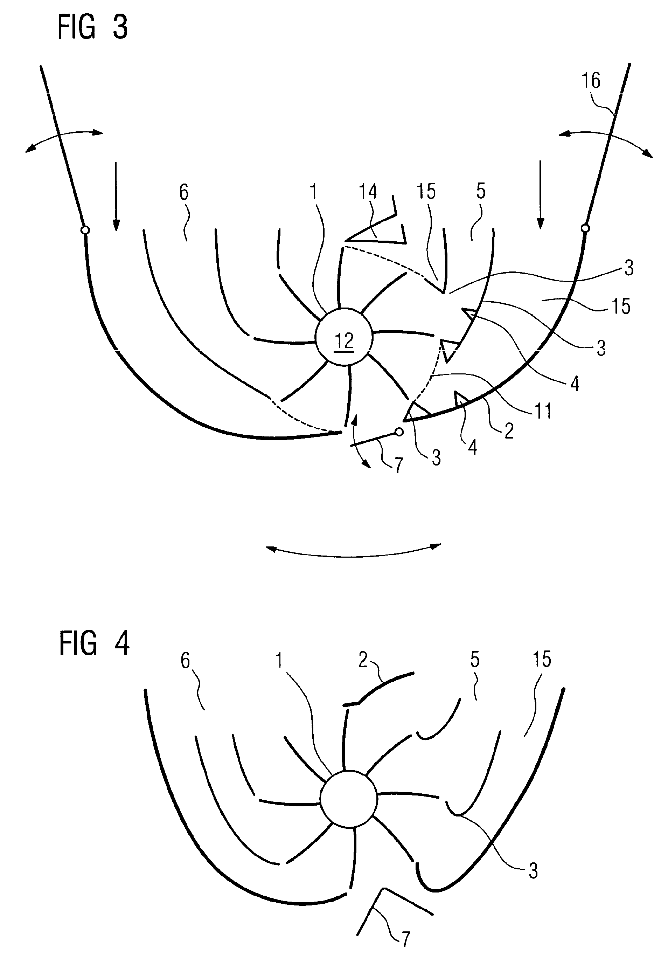

Figur 3 zeigt eine Bauvariante bei welchem bis auf den Windablasskanalbereich 8 mit Ablassventil 7 jeder Schaufelzwischenbereich des Windrades 1 seine eigenen Luftzufuhrbereiche in der freiliegenden Zone 6 oder seinen eigenen Windumkehrkammer 15 besitzt, so dass immer die exakte Luftzufuhr für jede Schaufel des Windrades gewährleistet ist. Die Rotationsbewegung des Rades wird erleichtert.

Diese Aufbauvariante soll verdeutlichen, dass die Menge und die Ausformung der Luftzufuhrbereiche (freiliegende Zone 6 und Windumkehrkammer 15) sowie das Verhältnis der Menge der Luftzufuhrbereiche zum Verhältnis der Menge der Schaufeln variabel ist.
Weiterhin sind in Figur 3 Trennbleche 11 angeordnet, die verhindern, dass Luft unkontrolliert entweicht. Nur die Luftmenge entweicht, die zwischen die Schaufeln gepresst ist. Windeinfangbleche 16 vergrößern das Volumen der dem Windrad zugeführten Luftmenge, dadurch auch den inneren Druck. Ein Generator 12 kann im Inneren des Windrades 1 angeordnet sein. Stoßstutzen 4 wirbeln den Luftstrom in die gewünschte Richtung.

### Figur 4

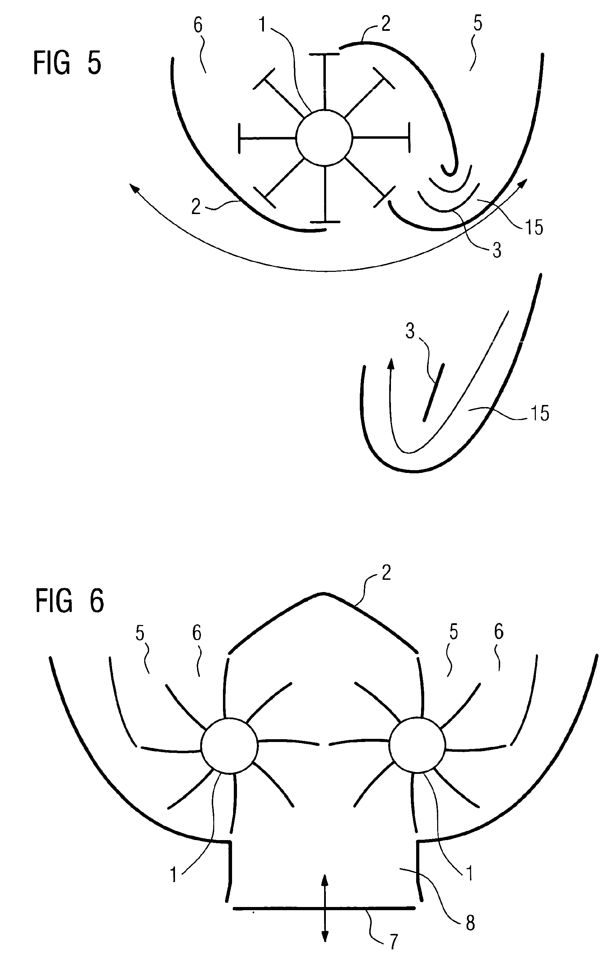

Die Figur 4 zeigt eine variable Ausformung der Gleichrichtungsbleche 3 aber unabhängig von der Ausformung bleibt die Funktionsweise.

### Figur 5

Figur 5 verdeutlicht, dass der Aufbau der Schaufeln des Windrades 1 variabel ist, ebenso die Anzahl der Schaufeln. Bei der Aufbauvariante in Figur 5 übernimmt das Gehäuse 2 durch seine Ausformung selbst die Funktion der Gleichrichtungsbleche 3. Die kleine Darstellung erläutert das Funktionsprinzip der Windumkehrkammern 15 und der Gleichrichtungsbleche 3.

### Figur 6

Figur 6 zeigt die Aufbaumöglichkeit in einem Gehäuse 2 zwei Windräder anzuordnen, mit Windkanal 8 und stellbaren Ablassventil 7.

### Figur 7

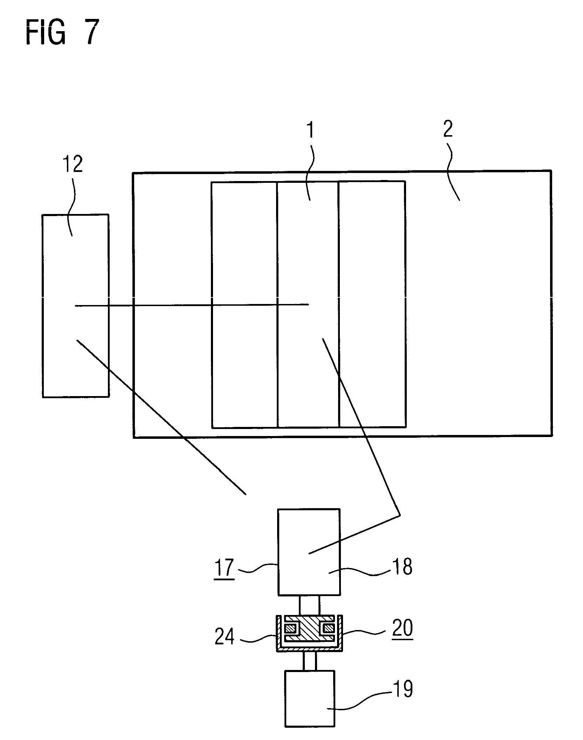

Figur 7 zeigt einen Querschnitt des Rotationsantriebs. Er realisiert, dass ein Generator oder ein mehrstufiger Generator in den Läufer des Windrades 1 eingebaut werden können. Der Generator oder auch ein mehrstufiger Generator können aber auch überein beliebiges Kupplungssystem mit der Welle des Windrades 1 verbunden sein. Dargestellt ist in Figur 7 eine mechanische Kupplung 20. Es können aber auch andere Kupplungssysteme eingesetzt werden, darunter auch selbsterregende elektromagnetische Kupplungssysteme.

### Figur 8

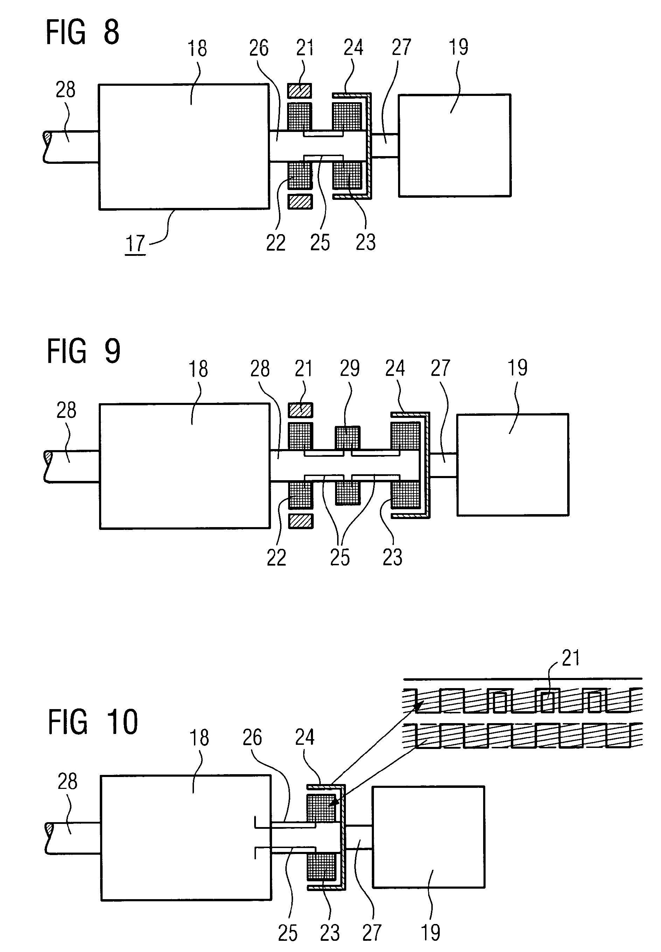

Figur 8 zeigt einen mehrstufigen Windgenerator 17, bei welchem zwischen der ersten Stufe 18 und der zweiten Stufe 19 eine selbsterregende Kupplung bestehend aus zwei Teilen angeordnet ist, die Erregerstufe 22 und die erregte Stufe 23. Die Erregerstufe 22 besteht aus Eisenkern und Wicklung zwischen zwei Dauer- oder Permanentmagneten 21 rotierend. Der in der Erregerstufe erzeugte Strom kann in der Welle 26 oder auch außen an der Welle 26 auf den zu erregenden Teil der Kupplung übertragen werden.
In der erregten Stufe 23 bestehend aus Eisenkern und Spule wird durch den Strom ein Magnetfeld aufgebaut.
Das Eisenkupplungsteil 24 der Antriebswelle der zweiten Generatorstufe 27 ist so montiert, dass es durch das aufgebaute elektromagnetische Feld angezogen wird und angetrieben werden kann, wenn bei einer bestimmten Drehzahl das erzeugte Magnetfeld stark genug ist.
Über die Antriebswelle 27 wird die zweite Generatorstufe 19 angetrieben und der Generator 19 läuft mit, kuppelt sich aber bei fallenden Drehzahlen, schwächerem Strom und elektromagnetischen Feld wieder ab.
Kennzeichnend für das selbsterregende elektromagnetische Kupplungssystem ist, dass der erzeugte Strom in der Erregerstufe 22 gleich wieder in der erregten Stufe 23 verbraucht wird und von der Drehzahl der Generatorwelle 26 sowie der Drehgeschwindigkeit der Antriebswelle 28 der ersten Generatorstufe 18 abhängig ist.
Bei jeder Drehbewegung der Antriebswelle 28 und der Generatorwelle 26 wird Strom induziert. Es ist aber möglich, über eine Steuerung nur dann Strom von der Erregerstufe 22 zu der zu erregenden Stufe 23 zu leiten, wenn er ausreicht um ein ausreichend starkes elektromagnetisches Feld aufzubauen, damit das Eisenteil 24 der Kupplung 24 angezogen werden kann.

Die Figur 8 verdeutlicht weiterhin, dass die Dauer- oder Permanentmagnete 21 feststehend eingebaut sind.
Alle Wicklungsarten können sowohl in der Erregerstufe 22 als auch in der erregten Stufe 23 eingesetzt werden, das Funktionsprinzip ändert sich nicht.

### Figur 9

Figur 9 zeigt eine Aufbaumöglichkeit, dass zwischen der Erregerstufe 22 und der erregten Stufe 23 der selbsterregenden elektromagnetischen Kupplungssysteme ein Transformator 29 oder ein anderes Bauteil mit gleicher Funktion eingebaut ist, durch den der erzeugte Strom hochtransformiert werden kann. Bei Anwendung bei anderen Maschinenarten auch heruntertransformiert.
Die Permanentmagnete sind feststehend.

### Figur 10

Bei diesem Aufbau wird ein Teil des erzeugten Stromes in der ersten Generatorstufe 18 für den zu erregenden Teil 23 der Kupplung von der Spule des Generators 18 abgenommen. Das Kupplungsteil 23 behält aber seine Funktionsweise wie in Figur 8 und 9 mit dem Eisenteil 24 als Kupplung für die Antriebswelle 27 der zweiten Generatorstufe.
Es ist aber auch ein Aufbau und eine Funktionsvariante als kurzgeschlossenes System ohne Erregerstrom vom Generator 18 möglich, durch den Einbau von Eisenkern, Wicklung und Magneten in den erregten Teil der Kupplung 23 und dem Eisenteil 24. Durch die Drehbewegung der Generatorwelle 26 wird in den Spulen durch die Magneten im gegenüberliegenden Kupplungsteil in dem anderen Läuferteil Strom induziert, weil durch die Drehbewegung des kurzgeschlossenen Systems in dem anderen Eisenteil ein elektromagnetisches Feld aufgebaut wird, welches in das Eisenkupplungsteil mit den Magneten übergeht und bei ausreichender Feldstärke des elektromagnetischen Feldes wird das Eisenkupplungsteil mitgezogen und auch das andere Teil in Drehbewegung gesetzt aber durch die Verluste dreht es sich langsamer.
Der Aufbau des erregten Teiles 23 und des Kupplungsteiles 24 ist variabel, denn sowohl die Magnete als auch die Wicklungen können wechselseitig auf ihnen angeordnet sein.

Alle bekannten kurzgeschlossenen Systeme können angewandt werden. Damit die Funktionsweise erreicht werden kann, muss der erregte Teil 23 auf der Generatorwelle 26 schneller laufen als das Kupplungsteil 24 auf der Welle der zweiten Generatorstufe 27.

### Figur 11

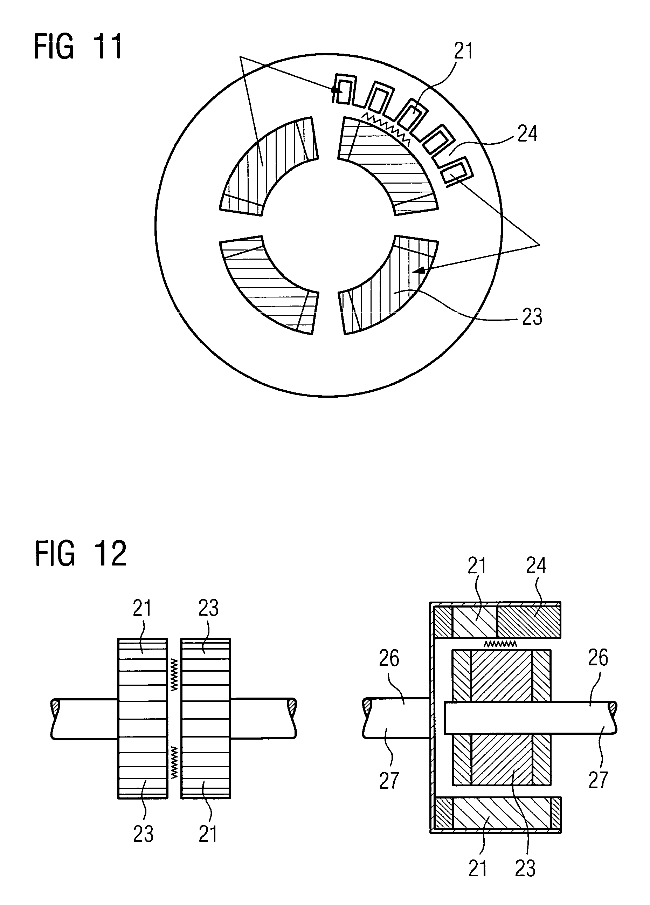

Figur 11 zeigt eine kompakt aufgebaute selbsterregende elektromagnetische Kupplung. Sie besteht aus zwei Teilen, den äußeren Teil, die Eisenkupplung 24, in welche Permanentmagnete 21 eingebettet sind, und den inneren Teil 23, welcher aus den verschiedensten Arten von Wicklungen und Eisenkernen bestehen kann. Die eingezeichneten Pfeile verdeutlichen, dass die Anordnung der Magnete 21 und der Wicklungen mit Eisenkern auch umgekehrt sein kann.
Durch die Drehbewegung wird in den Wicklungen mit Eisenkern durch die Magnete 21 Strom induziert und der induzierte Strom baut um sich ein Magnetfeld auf. Dieses wirkt auf den Eisenteil 24 mit den Magneten 21. Bei ausreichender Stärke des Magnetfeldes folgt das Eisenteil 24 der Drehbewegung und treibt die Generatorwelle der zweiten Stufe 27 an.
Figur 11 zeigt einen Querschnitt durch den äußeren und den inneren Teil der selbsterregenden Kupplung.

### Figur 12

Figur 12 zeigt den Aufriss des Aufbaus des äußeren Teils 24 und des inneren Teil 23 der selbsterregenden Kupplung.
Im Aufriss 12 ist weiterhin verdeutlicht, dass die Anzahl und die Größe der eingebauten Magnete und Eisenkerne variabel ist, aber an der Funktion nichts ändern.
Die erste Darstellung bei Figur 12 zeigt einen nichtummantelten Aufbau, sondern gegenüberliegende elektromagnetische Wirkung zwischen Spule und Magneten.
Die zweite Darstellung zeigt die Spule von Eisenkern und Magneten ummantelt. Die magnetische Wirkung ist um die Spulen.

Die Anordnung von Magneten oder Spulen auf dem erregten Teil 23 oder auf dem Kupplungsteil 24 ist variabel.

### Bezugszeichenliste

- 1.: Windrad
- 2.: Gehäuse
- 3.: Gleichrichtungsbleche
- 4.: Stoßstutzen
- 5.: Windeinlassöffnung
- 6.: freiliegende Zone
- 7.: stellbares Ablassventil
- 8.: Luft- oder Windablasskanal
- 9.: Unterdrucksystem zur Beschleunigung der Luftabsaugung
- 10.: Antriebswelle
- 11.: Trennbleche
- 12.: Generator im Inneren des Läufers des Windrades
- 13.: Windrad mit inneren Winddurchlauföffnungen
- 14.: Windsperrzone
- 15.: Windumkehrkammern
- 16.: bewegliche Windeinfangbleche am Windradgehäuse
- 17.: mehrstufiger Generator
- 18.: mehrstufiger Generator erste Stufe
- 19.: mehrstufiger Generator zweite Stufe
- 20.: mechanische Kupplungsart
- 21.: Dauer- oder Permanentmagnete
- 22.: Erregerstufe
- 23.: erregte Stufe
- 24.: Eisenkupplungsteil oder elektromagnetisches Kupplungsteil mit Eisenkern
- 25.: Erregerstromüberträger
- 26.: Generatorwelle von der ersten Generatorstufe zur zweiten Generatorstufe
- 27.: Antriebswelle zur zweiten Stufe 19
- 28.: Antriebswelle für erste Generatorstufe 18
- 29.: mitlaufender Transformator

## Patentansprüche

1. Der erfindungsgemäße Rotationsantrieb mit mechanischem und selbsterregendem Kupplungssystem ist **dadurch gekennzeichnet, dass** ein Windrad unterschiedlichster Bauart in einem speziell ausgebildetem Gehäuse rotiert. Das Gehäuse besteht aus zwei Teilen, mit unterschiedlichen Funktionsweisen. In einem Teil der freiliegenden Zone trifft die Windkraft direkt auf die Schaufeln des Windrades oder wird direkt an diese herangeführt. Im anderen Teil bildet das Gehäuse eine Windschattenseite mit einer oder mehreren Windumkehrkammern, in welche die Windkraft umgelenkt und an die Schaufeln des Windrades herangeführt wird.

2. Der Rotationsantrieb ist weiterhin **dadurch gekennzeichnet, dass** durch den speziellen Aufbau des Gehäuses mit Einengungen und Gleichrichtungsblechen alle durch das Gehäuse aufgefangenen Windkräfte sowohl in der freiliegenden Zone als auch im Bereich der Windumkehrkammern auf die Schaufeln des Wildrades konzentriert werden.

3. Der Rotationsantrieb ist weiterhin **gekennzeichnet dadurch, dass** ein oder mehrere stellbare Ablassventile angeordnet sind, durch welche der innere Druck und die Drehzahl des Windrades regulierbar sind.

4. Der Rotationsantrieb ist **gekennzeichnet dadurch, dass** in dem Bereich der freiliegenden Zone Gleichrichtungsbleche die Windkraft an die Schaufeln des Windrades heranführen und im Windschattenbereich mehrere Windumkehrkammern oder auch Gleichrichtungsbleche angeordnet sind, die die Windkraft an die Schaufeln des Windrades heranführen.

5. Der Rotationsantrieb ist weiterhin **gekennzeichnet dadurch, dass**
Trennbleche angeordnet sein können.

6. Der Rotationsantrieb ist weiterhin **gekennzeichnet dadurch, dass** am Gehäuse Windeinfangbleche angeordnet sein können.

7. Der Rotationsantrieb ist weiterhin **gekennzeichnet dadurch, dass** Stoßstutzen zum verwirbeln des Luftstroms angeordnet sind.

8. Der Rotationsantrieb. ist weiterhin **dadurch gekennzeichnet, dass** ein Windablasskanal angeordnet ist.

9. Der Rotationsantrieb ist weiterhin **dadurch gekennzeichnet, dass** im Windablasskanal ein Unterdrucksystem angeordnet ist.

10. Der Rotationsantrieb ist weiterhin **dadurch gekennzeichnet, dass** die Ausformung, Größe und Länge des Gehäuses und der Schaufeln sowie die Anzahl der Schaufeln des Windrades variabel ist und alle Arten von Windrädern verwendet werden können.

11. Der Rotationsantrieb ist weiterhin **dadurch gekennzeichnet, dass** mehrere Windräder in einem Gehäuse angeordnet sind.

12. Der Rotationsantrieb mit mechanischen und selbsterregendem Kupplungssystem ist weiterhin **gekennzeichnet dadurch, dass** im Inneren des Windradläufers aber auch außen ein oder ein mehrstufiger Generator angeordnet ist.

13. Der Rotationsantrieb ist weiterhin **dadurch gekennzeichnet, dass** alle Arten von Kupplungen mechanische und auch selbsterregende elektromagnetisch verwendet werden können.

14. Der Rotationsantrieb mit mechanischen und selbsterregendem Kupplungssystem ist weiterhin **dadurch gekennzeichnet, dass** bei der Verwendung eines mehrstufigen Generators die Generatorstufen durch untereinander mit selbsterregenden elektromagnetischen Kupplungen verbunden sind (Induktionskupplung).

15. Der Rotationsantrieb ist weiterhin **gekennzeichnet dadurch, dass** bei der verwendeten elektromagnetischen Kupplung die Erregerstufe Strom für die erregte Stufe herstellt.

16. Der Rotationsantrieb ist weiterhin **gekennzeichnet dadurch, dass** die elektromagnetische Kupplung verschiedenartig ausgeführt sein kann in unterschiedlichen Aufbauarten, aus mehreren Bauteilen gebildet oder in kompakter Bauweise, wobei Erregerstufe und erregte Stufe eine Einheit bilden.

17. Der Rotationsantrieb ist weiterhin **gekennzeichnet dadurch, dass** eine Steuerung zur Erregung der erregten Stufe nur bei ausreichender Drehzahl eingebaut ist.

18. Der Rotationsantrieb ist weiterhin **gekennzeichnet dadurch, dass** der in der Erregerstufe erzeugte Strom zwischen Erregerstufe und erregter Stufe transformierbar ist.

19. Der Rotationsantrieb ist weiterhin **gekennzeichnet dadurch, dass** der Strom für die erregte Stufe direkt von der Spule des Generators abgenommen werden kann um die erregte Stufe zu aktivieren.

20. Der Rotationsantrieb ist **dadurch gekennzeichnet, dass** er überall angewendet werden kann bei großen Windkraftanlagen in Windparks aber auch für kleine Ausführungen zur Anwendung in Haushalten, Camping, Booten, in der Schifffahrt und noch in weiteren Bereichen.

21. Der Rotationsantrieb ist weiterhin **gekennzeichnet dadurch, dass** die selbsterregende elektromagnetische Kupplung (Induktionskupplung) in allen Bereichen eingesetzt werden kann, wo Drehzahluntersetzung nötig ist, bei allen Windgeneratoren unabhängig von ihrer Schaufelanordnung, Gasturbinen, schnelllaufenden Motoren und noch in weiteren Bereichen.
